(19) Europäisches Patentamt / European Patent Office / Office européen des brevets

(11) **EP 1 741 901 B1**

(12) **FASCICULE DE BREVET EUROPEEN**

(45) Date de publication et mention
de la délivrance du brevet:
**06.04.2016 Bulletin 2016/14**

(51) Int Cl.:
*F02C 9/00* *(2006.01)* *F02C 9/28* *(2006.01)*
*B64C 27/12* *(2006.01)* *B64F 5/00* *(2006.01)*

(21) Numéro de dépôt: **06013726.2**

(22) Date de dépôt: **03.07.2006**

(54) **Procédé d'optimisation de l'enveloppe de performances d'un turbomoteur**

Verfahren zum Optimieren der Leistungshülle einer Turbomaschine

Method for optimising the performance envelope of a turbo engine

(84) Etats contractants désignés:
**GB IT**

(30) Priorité: **07.07.2005 FR 0507265**

(43) Date de publication de la demande:
**10.01.2007 Bulletin 2007/02**

(73) Titulaire: **Airbus Helicopters**
**13725 Marignane Cedex (FR)**

(72) Inventeur: **Lardillon, Christian**
**Les Granettes**
**13090 Aix en Provence (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A- 1 408 214     FR-A- 1 388 235**
**FR-A- 2 602 270     US-A1- 2004 020 214**

**Description**

La présente invention concerne un procédé d'optimisation de l'enveloppe de performances d'un turbomoteur de giravion permettant l'utilisation de ce turbomoteur dans une enveloppe alternative de performances différente de l'enveloppe de performances initialement autorisée pour ce turbomoteur.

La plupart des giravions construits actuellement sont équipés d'un ou deux turbomoteurs à turbine libre. La puissance est alors prélevée sur un étage basse pression de la turbine libre, lequel étage est mécaniquement indépendant de l'ensemble du compresseur et de l'étage haute pression du turbomoteur. La turbine libre d'un turbomoteur tournant généralement entre 20 000 et 50 000 tours par minute, une boîte de réduction de la vitesse de rotation est nécessaire pour la liaison au rotor principal du giravion dont la vitesse de rotation est sensiblement comprise entre 200 et 400 tours par minute: il s'agit de la boîte de transmission principale.

Les limitations thermiques d'un turbomoteur, et les limitations en couple d'une boîte de transmission principale, permettent de définir une enveloppe de performances englobant deux régimes de fonctionnement normaux d'utilisation d'un turbomoteur agencé sur un giravion monomoteur ou bimoteur:

- le régime de décollage correspondant à un niveau de couple pour la boîte de transmission et un échauffement du turbomoteur admissibles pendant un temps limité sans dégradation notable : c'est la puissance maximale au décollage, dénommée PMD par l'homme du métier, utilisable pendant cinq minutes,

- le régime maximal continu pendant lequel, à aucun moment, ne sont dépassées ni les possibilités de la boîte de transmission, ni celles résultant de l'échauffement maximal admissible en continu devant les aubages à haute pression du premier étage de la turbine : c'est la puissance maximale en continu, dénommée PMC par l'homme du métier, utilisable sans limite de temps et correspondant environ à 90% de la PMD,

Sur un giravion bimoteur, l'enveloppe de performances englobe aussi des régimes de surpuissance d'urgence, uniquement utilisés lorsqu'un des deux turbomoteurs est en panne :

- le régime d'urgence pendant lequel les possibilités de la boîte de transmission sur les étages d'entrée et les possibilités thermiques du turbomoteur sont utilisées au maximum : on parle de puissance de super urgence égale à environ de 112% à 120% de la PMD, dénommée PSU par l'homme du métier, utilisable pendant trente secondes consécutives au maximum, et ce trois fois pendant un vol. L'utilisation de la PSU entraîne la dépose et la révision du turbomoteur;

- le régime d'urgence pendant lequel les possibilités de la boîte de transmission sur les étages d'entrée et les possibilités du turbomoteur sont largement utilisées : on parle alors de puissance maximale d'urgence égale à environ de 105% à 110% de la PMD, dénommée PMU par l'homme du métier, utilisable pendant deux minutes consécutives au maximum ;

- le régime d'urgence pendant lequel les possibilités de la boîte de transmission sur les étages d'entrée et les possibilités thermiques du turbomoteur sont utilisées sans endommagement : on parle de puissance intermédiaire d'urgence, égale à la PMD et dénommée PIU par l'homme du métier, utilisable en continu pour le reste du vol après la panne du turbomoteur.

Par conséquent, les contraintes thermiques et mécaniques ainsi que le phénomène de fluage des aubes de turbine entraînent une dégradation du turbomoteur, plus ou moins importante selon les régimes. Pour garantir la sécurité du vol et l'obtention des performances, il est alors impératif de déterminer l'endommagement maximal acceptable pour un turbomoteur.

Par suite, on évalue le potentiel global d'utilisation du turbomoteur. Cela revient concrètement à définir un nombre d'heures de vol maximal, dénommé TBO (« *Time Between Overhaul » en langue anglaise)* par l'homme du métier, que le turbomoteur est capable d'effectuer à compter de sa dernière révision ou de sa première utilisation, suivant le cas dans lequel on se trouve. Une fois ce TBO atteint, le turbomoteur est déposé puis révisé.

Dans la suite du texte et par commodité, on entendra par « dernière révision du turbomoteur » soit la première utilisation du turbomoteur soit effectivement la dernière révision de ce dernier.

Par ailleurs, pour qu'un giravion obtienne son autorisation de vol dans un pays déterminé, il est requis que l'enveloppe de performances ainsi que le TBO du ou des turbomoteurs du giravion soient certifiés par les services officiels du pays considéré pour un spectre d'utilisation précis. Cette autorisation ne survient donc qu'à l'issue d'essais de certification complets très onéreux.

Ces essais de certification complets d'un turbomoteur étant réalisés pour justifier une enveloppe de performances associée à un TBO, il n'est à priori pas possible d'utiliser le turbomoteur selon une enveloppe de performances alternative, différente de l'enveloppe de performances initialement autorisée, sans réaliser des essais de certification complets très onéreux.

Or, il se trouve par exemple que l'enveloppe de performances décrite précédemment, associé à un TBO d'environ 2500 heures, correspond à un spectre d'utilisation type cohérent avec la plupart des applications civiles. Néanmoins, pour une application militaire ou pour certaines missions particulières, une mission de sauvetage nécessitant un hélitreuillage par exemple, cette enveloppe peut s'avérer inadaptée.

Le document FR 2 602 270 prévoit un procédé permettant de sélectionner automatiquement des limites élargies pour remplir une mission particulière par exemple. Toutefois, cette sélection se fait au détriment du TBO du turbomoteur dans la mesure où ce dernier doit alors être révisé.

De même, le document US 2004/0020214 décrit un procédé permettant d'augmenter la puissance d'un turbomoteur. Néanmoins, cette augmentation se fait au détriment de la durée de vie de ce turbomoteur.

Pour remédier au problème, une solution consisterait à fabriquer, pour un giravion existant, des turbomoteurs dédiés à une application spécifique. Cependant, compte tenu des coûts de développement, de certification et d'intégration, cette solution n'apparaît pas comme étant satisfaisante. Il faudrait en effet des productions importantes pour amortir correctement l'investissement réalisé. Ceci va à rencontre du principe souhaité, selon lequel on utilise un turbomoteur spécifique ayant des performances alternatives sur un giravion existant pour répondre à un besoin particulier, qui implique la production de petites séries.

Dans ces conditions, la présente invention a pour objet un procédé d'optimisation de l'enveloppe initiale de performances, c'est-à-dire initialement autorisée pour un turbomoteur de giravion existant, en n'effectuant que des essais complémentaires et non pas des essais complets.

Il devient alors possible d'utiliser sur un giravion existant, destiné à des applications spécifiques, un turbomoteur qui n'était pas initialement conçu pour cela. Ainsi, l'hélicoptériste peut s'affranchir des frais de développement très importants d'un nouveau turbomoteur en augmentant les possibilités d'un moteur certifié et éprouvé, en utilisation civile par exemple.

Selon l'invention, la revendication 1 définit un procédé d'optimisation d'une enveloppe initiale de performances d'un turbomoteur de giravion, cette enveloppe initiale étant associée à un nombre d'heures de vol maximal TBO que ledit turbomoteur peut effectuer avant sa révision ainsi qu'à au moins un premier régime initial défini par deux premières performances initiales relatives respectivement à une première puissance et un premier temps d'utilisation de ladite première puissance, est remarquable en ce que, pour réaliser l'optimisation, on définit au moins une enveloppe alternative de performances en effectuant une modification de l'enveloppe initiale, la modification étant compensée par une réduction d'au moins une des premières performances initiales du premier régime initial. De plus, le potentiel global du turbomoteur n'est pas modifié dans la mesure où l'enveloppe alternative est associée au nombre d'heures de vol maximal TBO autorisé pour un fonctionnement selon l'enveloppe initiale.

Ainsi, une enveloppe de performances est associée à un nombre d'heures de vol maximal et à au moins un régime de fonctionnement, ce régime correspondant à une puissance utilisable pendant un temps déterminé. La présente invention permet de déterminer une enveloppe alternative de performances qui diffère en fin de compte de l'enveloppe initiale du turbomoteur.

Pour cela, on modifie l'enveloppe initiale en réduisant la puissance d'un régime de l'enveloppe initiale et/ou le temps d'utilisation de cette puissance. Ensuite:

a) on détermine l'endommagement économisé par ladite réduction,

b) on transforme cet endommagement en un régime temporaire défini par une puissance temporaire et un temps d'utilisation temporaire de ladite puissance temporaire,

c) on répartit différemment ledit régime temporaire dans ladite enveloppe initiale afin d'obtenir ladite enveloppe alternative.

En effet, on comprend bien que la réduction des performances, la puissance et/ou le temps d'utilisation, d'un régime a pour conséquence une dégradation moindre du turbomoteur. Or l'invention prévoit d'optimiser l'enveloppe initiale tout en conservant le nombre d'heures de vol maximal autorisé ce qui permet d'éviter la réalisation d'essais coûteux.

Par conséquent, lors de l'étape a), on détermine l'endommagement économisé en réduisant une des premières performances d'au moins un régime initial. Cet endommagement économisé correspond à l'usure qu'aurait subi le turbomoteur si la réduction évoquée précédemment n'avait pas été entreprise.

Ensuite, au cours de l'étape b), on détermine un régime temporaire, adapté au besoin souhaité, dont l'utilisation provoquerait un endommagement du turbomoteur équivalent à l'endommagement économisé.

Enfin, il convient de réinjecter ce régime temporaire dans l'enveloppe initiale afin de la modifier et d'obtenir ainsi l'enveloppe alternative.

Selon un premier mode de réalisation, la modification de l'enveloppe initiale consiste à augmenter l'une desdites deux premières performances initiales en réduisant l'autre.

Selon un deuxième mode de réalisation, l'enveloppe alternative comporte un régime supplémentaire dont n'est pas munie l'enveloppe initiale. La modification consiste alors à déterminer le régime supplémentaire en réduisant au moins une desdites deux premières performances initiales dudit premier régime initial. Le régime supplémentaire correspond en fait au régime temporaire.

Selon un troisième mode de réalisation, l'enveloppe initiale comportant un deuxième régime initial défini par deux deuxièmes performances initiales relatives respectivement à une deuxième puissance et un deuxième temps d'utilisation de la deuxième puissance, la modification consiste à augmenter au moins une desdites deux deuxièmes performances initiales du deuxième régime en réduisant au moins une des deux premières performances initiales du premier régime.

L'invention et ses avantages apparaîtront avec plus de détails dans le cadre de la description suivante, qui illustre un exemple de réalisation préféré, donné sans aucun caractère limitatif, en référence aux figures annexées qui représentent :

- la figure 1, un diagramme présentant le premier régime initial,

- les figures 2 à 4, un diagramme présentant une réduction d'au moins une des deux premières performances du premier régime initial,

- les figures 5 et 6, un diagramme présentant l'évolution du premier régime initial selon un premier mode de réalisation,

- la figure 7, un diagramme présentant le régime supplémentaire, et

- les figures 8 à 11, un diagramme présentant l'évolution du deuxième régime initial selon un troisième mode de réalisation.

Les éléments présents dans plusieurs figures distinctes sont affectés d'une seule référence.

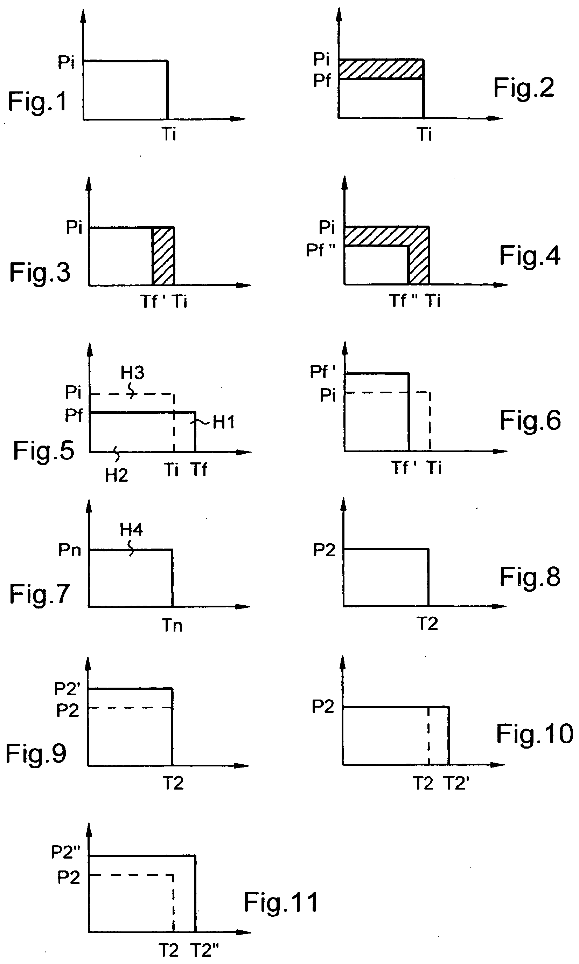

Les figures 1 à 11 sont des diagrammes ayant en ordonnée la puissance développée par le turbomoteur et en abscisse le temps d'utilisation de cette puissance.

La figure 1 présente un premier régime initial de l'enveloppe initiale de performances autorisée pour un turbomoteur donné. Ce premier régime est défini par deux premières performances initiales relatives respectivement à une première puissance Pi et un premier temps d'utilisation Ti de la première puissance Pi. Ainsi, ce premier régime prévoit l'utilisation du turbomoteur à la puissance Pi pendant au maximum un temps d'utilisation Ti.

Pour créer une enveloppe alternative de performances qui répondra mieux à un besoin spécifique de l'utilisateur, il est alors nécessaire d'effectuer une modification de l'enveloppe initiale. Cette modification est compensée par une réduction d'au moins une des deux premières performances du premier régime.

Par suite, en fonction des besoins de l'utilisateur, on va :

- soit baisser la première puissance Pi à une puissance Pf conformément à la figure 2,

- soit baisser le premier temps d'utilisation Ti à un temps Tf' conformément à la figure 3,

- soit baisser la première puissance Pi à une puissance Pf" et baisser le premier temps d'utilisation Ti à un temps Tf" conformément à la figure 4.

Sur chacune des figures 2 à 4, la zone hachurée correspond à une plage de fonctionnement du turbomoteur qui n'est plus utilisée.

Selon l'invention au cours d'une étape a), on va alors déterminer l'endommagement du turbomoteur économisé par la non exploitation des zones hachurées. En effet, cette non exploitation permet de préserver le turbomoteur et donc de limiter son usure, c'est-à-dire son endommagement.

Ensuite, le but de l'invention n'étant pas de limiter l'endommagement du turbomoteur mais de permettre un fonctionnement de ce dernier dans une enveloppe alternative à iso TBO avec l'enveloppe initiale, durant l'étape b) on détermine un régime temporaire défini par une puissance temporaire et un temps d'utilisation temporaire. Puis au cours de l'étape c) on répartit différemment ce régime temporaire pour obtenir finalement l'enveloppe alternative.

En référence aux figures 5 et 6, selon un premier mode de réalisation, l'enveloppe alternative est obtenue en réduisant une des deux première performances du premier régime de l'enveloppe initiale et en augmentant l'autre première performance du premier régime.

En effet, selon une première variante de ce premier mode de réalisation, lorsque seule la puissance est réduite de Pi à Pf (figure 2), il est possible d'augmenter le temps d'utilisation de Ti à Tf comme indiqué par la figure 5. Sur cette dernière, le premier régime initial est en pointillés alors que le régime obtenu par la modification est en traits pleins.

La zone H1 correspond en fait au régime temporaire qui a été ajouté au régime initial réduit, zone H2, la réduction étant représentée par la zone H3.

En outre, compte tenu des explications précédentes, les zones H1 et H3 induisent un endommagement égal du turbomoteur. Il est à noter qu'il n'y a pas nécessairement une identité surfacique des zones H1 et H3 puisque l'endommagement dépend à la fois des puissances considérées et de leur temps d'utilisation.

Par conséquent, le procédé selon l'invention a permis de transformer une enveloppe initiale de performances d'un turbomoteur munie d'un premier régime autorisant l'utilisation d'une puissance Pi durant un temps Ti en une enveloppe alternative autorisant l'utilisation d'une puissance Pf pendant une durée Tf, la modification étant effectuée sans modification du potentiel global du turbomoteur.

Par ailleurs, afin d'automatiser la modification, cette dernière peut être réalisée à l'aide de la première relation de transfert suivante, où C représente un taux de transfert défini par le motoriste :

$$(Pi-Pf)*Ti = C*Pf*(Tf-Ti)$$

"*" et "-" représentant respectivement les signes de la multiplication et de la soustraction.

Une fois le taux de transfert établi par un essai basique, il n'est plus nécessaire de procéder à des essais complets onéreux pour justifier l'utilisation d'une nouvelle enveloppe alternative.

De même, en référence à la figure 6 selon une deuxième variante de ce mode de réalisation, il est possible de réduire le temps d'utilisation du premier régime initial en augmentant la puissance de ce régime afin d'obtenir l'enveloppe alternative.

L'enveloppe alternative comprend alors un régime alternatif, représenté en traits pleins, autorisant l'utilisation d'une puissance Pf' durant un temps d'utilisation Tf'.

Dans ces conditions, la relation de transfert devient :

$$Pi*(Ti-Tf')=C*(Pf'-Pi)*Tf'$$

En référence à la figure 7, selon un deuxième mode de réalisation, l'enveloppe alternative comporte un régime supplémentaire qui n'est pas compris dans l'enveloppe initiale.

En réduisant au moins une des deux premières performances du premier régime de l'enveloppe initiale, il devient possible de créer un nouveau régime autorisant l'utilisation du turbomoteur à une puissance Pn pendant un temps d'utilisation Tn. La zone H4 correspond alors au régime temporaire.

En référence à la figure 8, selon un troisième mode de réalisation, l'enveloppe initiale comporte un deuxième régime initial, défini par deux deuxièmes performances à savoir une deuxième puissance P2 et un temps d'utilisation T2, autorisant le fonctionnement du turbomoteur à une puissance P2 durant un temps d'utilisation T2. En réduisant au moins une des deux premières performances du premier régime conformément aux figures 2 à 4, on va modifier au moins une des deux deuxièmes performances du deuxième régime de manière à obtenir l'enveloppe alternative.

Selon une première variante de ce mode de réalisation représentée par la figure 9, seule la deuxième puissance est augmentée en passant d'une puissance P2 à une puissance P2'.

Par suite, l'enveloppe alternative sera par exemple constituée d'un régime permettant l'utilisation du turbomoteur à une puissance Pf durant un temps Ti (figure 2) et d'un régime autorisant le fonctionnement de ce turbomoteur à une puissance P2' durant un temps T2.

Dans ce cas de figure, la relation de transfert est égale à :

$$(Pi-Pf)*Ti=C*(P2'-P2)*T2$$

Selon une deuxième variante représentée par la figure 10, seul le temps d'utilisation est modifié en passant d'un temps T2 à un temps T2'. En tenant compte de l'hypothèse précédente, la relation de transfert devient :

$$(Pi-Pf)*Ti=C*P2*(T2'-T2)$$

Enfin, selon une troisième variante de ce troisième mode de réalisation, les deux deuxièmes performances du deuxième régime initial sont augmentées, la puissance passant de P2 à P2" alors le temps d'utilisation passe de T2 à T2". Avec les mêmes hypothèses que précédemment, la relation de transfert est égale à :

$$(Pi-Pf)*Ti=C*(P2''-P2)*(T2''-T2).$$

Bien évidemment, le taux de transfert C peut prendre des valeurs différentes pour chacune des relations de transfert précédemment décrites.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles.

Par exemple, les exemples de réalisation décrits par les figures 5 à 6 ne font références qu'à une enveloppe initiale ne contenant qu'un premier régime initial qui va être modifié pour l'obtention de l'enveloppe alternative. Toutefois, cette enveloppe initiale pourrait comporter une pluralité de régimes initiaux. Alors, plusieurs d'entre eux pourraient être modifiés en vue de l'obtention de l'enveloppe alternative.

## Revendications

**1.** Procédé d'optimisation d'une enveloppe initiale de performances d'un turbomoteur de giravion, ladite enveloppe initiale étant associée à un nombre d'heures de vol maximal (TBO) que ledit turbomoteur peut effectuer avant sa révision, ainsi qu'à au moins un premier régime initial défini par deux premières performances initiales relatives respectivement à une première puissance (Pi) et un premier temps d'utilisation (Ti) de ladite première puissance (Pi), au cours duquel on définit une enveloppe alternative de performances en effectuant une modification de ladite enveloppe initiale pour réaliser ladite optimisation, ladite modification étant compensée par une réduction d'au moins une desdites premières performances initiales dudit premier régime initial, **caractérisé en ce que** adite enveloppe alternative est associée au dit nombre d'heures de vol maximal (TBO) autorisé pour un fonctionnement du turbomoteur selon ladite enveloppe initiale, et **caractérisé en outre en ce qu'**on :

a) détermine l'endommagement économisé par ladite réduction,
b) transforme ledit endommagement en un régime temporaire défini par une puissance temporaire et un temps d'utilisation temporaire de ladite puissance temporaire,
c) on répartit différemment ledit régime temporaire dans ladite enveloppe initiale afin d'obtenir ladite enveloppe alternative.

**2.** Procédé selon la revendication 1,
**caractérisé en ce que** ladite modification consiste à augmenter une desdites deux premières performances initiales en réduisant l'autre.

**3.** Procédé selon l'une quelconque des revendications précédentes,
**caractérisé en ce que** ladite enveloppe alternative comporte un régime supplémentaire dont n'est pas munie ladite enveloppe initiale, ladite modification consistant à déterminer ledit régime supplémentaire en réduisant au moins une desdites deux premières performances initiales dudit premier régime initial.

**4.** Procédé selon l'une quelconque des revendications précédentes,
**caractérisé en ce que** ladite enveloppe initiale comportant un deuxième régime initial défini par deux deuxièmes performances initiales relatives respectivement à une deuxième puissance et un deuxième temps d'utilisation de ladite deuxième puissance, ladite modification consiste à augmenter au moins une desdites deux deuxièmes performances initiales dudit deuxième régime en réduisant au moins une desdites deux premières performances initiales dudit premier régime.

**Patentansprüche**

1. Verfahren zur Optimierung eines ursprünglichen Leistungsrahmens eines Turbomotors eines Drehflügelflugzeugs, wobei der ursprüngliche Rahmen mit einer maximalen Anzahl (TBO) von Flugstunden verbunden ist, die der Turbomotor vor seiner Überholung leisten kann, sowie mit mindestens einer ersten ursprünglichen Betriebsart, die durch zwei erste ursprüngliche Leistungen definiert ist, die jeweils abhängig sind von einer ersten Leistung (Pi) und einer ersten Verwendungszeit (Ti) der ersten Leistung (Pi), während der ein alternativer Leistungsrahmen definiert wird, indem eine Veränderung des ursprünglichen Rahmens ausgeführt wird, um die Optimierung zu erzielen, wobei die Veränderung durch eine Reduzierung mindestens einer der ersten ursprünglichen Leistungen der ersten ursprünglichen Betriebsart kompensiert wird,
**dadurch gekennzeichnet, dass** der alternative Rahmen mit der maximalen Anzahl (TBO) von Flugstunden verbunden ist, die für einen Betrieb des Turbomotors innerhalb des ursprünglichen Rahmens autorisiert ist, und ferner **dadurch gekennzeichnet, dass** man:

   a) die durch die Reduzierung eingesparte Beschädigung bestimmt,
   b) die Beschädigung in eine zeitweise Betriebsart umgewandelt wird, die definiert ist durch eine zeitweise Leistung und eine Zeitspanne der zeitweisen Anwendung der zeitweisen Leistung,
   c) die zeitweise Betriebsart in dem ursprünglichen Rahmen anders verteilt wird, um den alternativen Rahmen zu erhalten.

2. Verfahren nach Anspruch 1,
**dadurch gekennzeichnet, dass** die Veränderung in einer Erhöhung einer der beiden ursprünglichen ersten Leistungen bei Reduzierung der anderen Leistung besteht.

3. Verfahren nach einem der vorstehenden Ansprüche,
**dadurch gekennzeichnet, dass** der alternative Rahmen eine zusätzliche Betriebsart aufweist, die der ursprüngliche Rahmen nicht aufweist, wobei die Veränderung darin besteht, die zusätzliche Betriebsart zu bestimmen, indem mindestens eine der beiden ursprünglichen ersten Leistungen der ersten ursprünglichen Betriebsart reduziert wird.

4. Verfahren nach einem der vorstehenden Ansprüche,
**dadurch gekennzeichnet, dass** der ursprüngliche Rahmen eine zweite ursprüngliche Betriebsart aufweist, die definiert ist durch zwei zweite ursprüngliche Leistungen, die jeweils abhängig sind von einer zweiten Leistung und einer zweiten Anwendungszeit der zweiten Leistung, wobei die Veränderung darin besteht, mindestens eine der beiden zweiten ursprünglichen Leistungen der zweiten Betriebsart zu erhöhen, bei Reduzierung mindestens einer der beiden ersten ursprünglichen Leistungen der ersten Betriebsart.

**Claims**

1. A method for optimising an initial performance envelope of a rotorcraft turbo engine, said initial envelope being associated with a maximum number of hours of flight (TBO) that said turbo engine can carry out before its overhaul, and with at least one first initial regime that is defined by two first initial performance data that relate respectively to a first power level (Pi) and a first period of use (Ti) of said first power level (Pi), during which an alternative performance envelope is defined by modifying said initial envelope to make said optimisation, said modification being compensated by a reduction of at least one of said first initial performance data of said first initial regime, **characterised in that** said alternative envelope is associated with said maximum number of hours of flight (TBO) that is authorised for operation of the turbo engine in accordance with said initial envelope, and further **characterised in that**

   a) the saving on damage brought about by said reduction is determined,
   b) said damage is converted to a temporary regime defined by a temporary power level and a temporary period of use of said temporary power level,
   c) said temporary regime is distributed differently within said initial envelope in order to obtain said alternative envelope.

2. A method according to Claim 1,
**characterised in that** said modification consists in increasing one of said two first initial performance data by reducing the other one.

3. A method according to one of the preceding claims,
**characterised in that** said alternative envelope comprises a supplementary regime with which said initial envelope is not provided, said modification consisting in determining said supplementary regime by reducing at least one of said two first initial performance data of said first initial regime.

4. A method according to one of the preceding claims,
**characterised in that**, with said initial envelope comprising a second initial regime that is defined by two second initial performance data that relate respectively to a second power level and a second period of use of said second power level, said modification consists in increasing at least one of said two second initial performance data of said second regime by reducing at least one of said two first initial performance data of said first regime.

Fig.1

Fig.2

Fig.3

Fig.4

Fig.5

Fig.6

Fig.7

Fig.8

Fig.9

Fig.10

Fig.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2602270

- US 20040020214 A